(19) Europäisches Patentamt
European Patent Office
Office européen des brevets

(11) **EP 2 735 622 B1**

(12) **EUROPEAN PATENT SPECIFICATION**

(45) Date of publication and mention
of the grant of the patent:
**04.09.2019 Bulletin 2019/36**

(51) Int Cl.:
*C22C 38/00* (2006.01)   *B21B 1/26* (2006.01)
*B21B 3/00* (2006.01)   *C21D 8/02* (2006.01)
*C22C 38/58* (2006.01)

(21) Application number: **12815149.5**

(22) Date of filing: **13.06.2012**

(86) International application number:
**PCT/JP2012/065671**

(87) International publication number:
**WO 2013/011791 (24.01.2013 Gazette 2013/04)**

(54) **LOW-YIELD-RATIO HIGH-STRENGTH HOT-ROLLED STEEL PLATE WITH EXCELLENT LOW-TEMPERATURE TOUGHNESS AND PROCESS FOR PRODUCING SAME**

HOCHFESTE WARMGEWALZTE STAHLPLATTE MIT NIEDRIGEM ERTRAGSVERHÄLTNIS UND HERVORRAGENDER NIEDRIGTEMPERATURBESTÄNDIGKEIT SOWIE HERSTELLUNGSVERFAHREN DAFÜR

PLAQUE D'ACIER LAMINÉE À CHAUD HAUTE RÉSISTANCE À FAIBLE RAPPORT D'ÉLASTICITÉ AYANT UNE EXCELLENTE TÉNACITÉ À BASSE TEMPÉRATURE ET PROCÉDÉ DE PRODUCTION DE CELLE-CI

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **20.07.2011 JP 2011158509**

(43) Date of publication of application:
**28.05.2014 Bulletin 2014/22**

(73) Proprietor: **JFE Steel Corporation**
**Tokyo, 100-0011 (JP)**

(72) Inventors:
• **GOTO, Sota**
**Tokyo 100-0011 (JP)**
• **NAKATA, Hiroshi**
**Tokyo 100-0011 (JP)**
• **KAMI, Chikara**
**Tokyo 100-0011 (JP)**

• **ABE, Toshifumi**
**Tokyo 100-0011 (JP)**
• **TAMAI, Takato**
**Tokyo 100-0011 (JP)**

(74) Representative: **Grünecker Patent- und Rechtsanwälte**
**PartG mbB**
**Leopoldstraße 4**
**80802 München (DE)**

(56) References cited:
**EP-A1- 2 133 441    WO-A1-2009/145328**
**JP-A- S63 227 715    JP-A- 2006 291 348**
**JP-A- 2006 299 413    JP-A- 2006 299 413**
**JP-A- 2006 299 415    JP-A- 2008 240 151**
**JP-A- 2010 280 932    JP-A- 2011 017 061**
**JP-A- 2011 017 061    KR-A- 20100 027 993**

**Description**

[Technical Field]

The present invention relates to a low yield ratio and high-strength hot rolled steel sheet suited to a material for a spiral steel pipe or an electric resistance welded steel pipe to be used for a linepipe, and a method for producing the low yield ratio and high-strength hot rolled steel sheet, and in particular, relates to stable ensuring of a low yield ratio and excellent low temperature toughness while preventing a reduction in yield strength after pipe production.

The "high strength" used here indicates the case where the yield strength in a direction inclined at an angle of 30° with respect to a rolling direction is 480 MPa or more and where the tensile strength in a width direction of the sheet is 600 MPa or more. The "low temperature toughness" indicates the case where the fracture transition temperature vTrs determined in a Charpy impact test is -80°C or lower and preferably -95°C or lower. The "low yield ratio" indicates the case where the stress-strain curve is of a continuous yield type and where the yield ratio is 85% or less. The "steel sheet" includes a steel plate and a steel strip.

The reason the yield strength in the direction inclined at an angle of 30° with respect to the rolling direction is specified to be 480 MPa or more is that the circumferential direction of a spiral steel pipe is inclined at an angle of about 30° with respect to the rolling direction of the hot rolled steel sheet and that the yield strength of the spiral steel pipe in the circumferential direction is improved.

[Background Art]

Recently spiral steel pipes, which have been produced by helically winding a steel sheet, have often been used as linepipes for transporting crude oil and natural gas because large-diameter steel pipes can be efficiently produced. In particular, pipelines for long-distance transportation are required to increase transportation efficiency, so highpressure pipelines are used. A large number of oil wells and gas wells are located in very cold lands, so pipelines often pass through very cold lands. Thus, linepipes to be used are required to have high strength and high toughness. Furthermore, linepipes are required to have low yield ratios from the viewpoint of achieving good buckling resistance and earthquake protection. The yield ratio of a spiral steel pipe in the longitudinal direction is mostly unchanged before and after pipe production and is substantially equal to that of a hot rolled steel sheet used as a material. Thus, a hot rolled steel sheet serving as a material needs to have a low yield ratio in order that a linepipe formed of a spiral steel pipe may have a low yield ratio.

In light of the foregoing requirements, for example, Patent Literature 1 describes a method for producing a hot rolled steel sheet for a low-yield-ratio, high-tensile line pipe with excellent low-temperature toughness. In a technique described in Patent Literature 1, a steel slab containing, on a weight percent basis, 0.03% to 0.12% C, 0.50% or less Si, 1.70% or less Mn, and 0.070% or less Al, and further containing at least one selected from 0.01% to 0.05% Nb, 0.01% to 0.02% V, and 0.01% to 0.20% Ti is heated to 1180°C to 1300°C, subjected to hot rolling under conditions including a rough rolling finishing temperature of 950°C to 1050°C and a finishing temperature of 760°C to 800°C, and cooled at a cooling rate of 5 to 20 °C/sec.. Air cooling is started at more than 670°C. Then the resulting article is held for 5 to 20 seconds, cooled at a cooling rate of 20 °C/sec. or more, and coiled at 500°C or lower, thereby providing a hot rolled steel sheet. According to the technique described in Patent Literature 1, it is possible to produce a hot rolled steel sheet having a tensile strength of 60 kg/mm$^2$ or more (590 MPa or more), a low yield ratio of 85% or less, and high toughness, i.e., a fracture transition temperature of -60°C or lower.

Patent Literature 2 describes a method for producing a hot rolled steel sheet for a high-strength, low-yield-ratio pipe. A technique described in Patent Literature 2 is a method for producing a hot rolled steel sheet by heating a steel containing 0.02% to 0.12% C, 0.1% to 1.5% Si, 2.0% or less Mn, and 0.01% to 0.10% Al, and further containing 0.1% to 1.5% (Mo + Cr), to 1000°C to 1300°C, completing hot rolling at a temperature ranging from 750°C to 950°C, cooling the resulting article at a cooling rate of 10 to 50 °C/sec. to a coiling temperature, and coiling the article at a temperature ranging from 480°C to 600°C. The technique described in Patent Literature 2 provides a hot rolled steel sheet without performing rapid cooling from an austenite temperature range, the hot rolled steel sheet being mainly composed of ferrite, containing martensite in an area ratio of 1% to 20%, having a low yield ratio of 85% or less, and exhibiting only a slight reduction in yield strength after pipe production.

Patent Literature 3 describes a method for producing a low-yield-ratio electric resistance welded steel pipe with excellent low-temperature toughness. In a technique described in Patent Literature 3, a slab containing, on a mass percent basis, 0.01% to 0.09% C, 0.50% or less Si, 2.5% or less Mn, 0.01% to 0.10% Al, and 0.005% to 0.10% Nb, and further containing one or more elements selected from 0.5% or less Mo, 0.5% or less Cu, 0.5% or less Ni, and 0.5% or less Cr in such a manner that Mneq, which is a relational expression of contents of Mn, Si, P, Cr, Ni, and Mo satisfies 2.0 or more is hot-rolled, cooled at a cooling rate of 5 °C/sec. or more to 500°C to 650°C, coiled, held in this temperature range for a holding time of 10 minutes or more, and cooled to a temperature of less than 500°C, thereby providing a hot rolled steel sheet. The hot rolled steel sheet is formed into an electric resistance welded steel pipe. According to a technique described in Patent Literature 3, it is possible to produce an electric resistance welded steel pipe having a microstructure containing bainitic ferrite as a main phase, 3% or more martensite, and, if necessary, 1% or more residual austenite, and having a fracture transition temperature of -50°C or lower, excellent low-temperature toughness, and high plastic deformation absorptive ability.

Patent Literature 4 describes a low yield ratio, high-toughness thick steel sheet. In a technique described in Patent Literature 4, a slab having a composition containing 0.03% to 0.15% C, 1.0% or less Si, 1.0% to 2.0% Mn, 0.005% to 0.060% Al, 0.008% to 0.030% Ti, 0.0020% to 0.010% N, and 0.010% or less O is heated to preferably 950°C to 1300°C, is subjected to hot rolling in which the rolling reduction is 10% or more in the temperature range of the Ar3 transformation temperature + 100°C to the Ar3 transformation temperature + 150°C and in which the finish rolling temperature is 800°C to 700°C. Then accelerated cooling is started at a temperature equal to or higher than the finish rolling temperature - 50°C. After water cooling is performed at an average cooling rate of 5 to 50 °C/sec. to 400°C to 150°C, air cooling is performed. Thereby, it is possible to provide a low-yield-ratio, high-toughness thick steel sheet having a mixed microstructure of ferrite with an average grain size of 10 to 50 $\mu$m and bainite in which martensitic islands (or M-A constituent) are dispersed in an area ratio of 1% to 20%.

Patent Literature 5 discloses a method of production of high strength hot rolled steel plate for spiral pipe superior in low temperature toughness containing, by mass%, C: 0.01 to 0.1%, Si: 0.05 to 0.5%, Mn: 1 to 2%, P: $\leq$0.03%, S: $\leq$0.005%, Al: 0.005 to 0.05%, Nb: 0.005 to 0.08%, and Ti: 0.005 to 0.02%, Mo: 0.01% to less than 0.1%, Cr: 0.01 to 0.3%, Cu: 0.01 to 0.3%, optionally one or more of Ni: 0.01 to 0.3%, V: 0.01% to less than 0.04%, Ca: 0.0005 to 0.005%, B: 0.0002 to 0.003% and a balance of Fe and unavoidable impurities, comprising: i) a hot rolling step including heating the steel to a heating temperature of 1100°C to 1200°C, subjecting the heated steel to rough rolling and subjecting the sheet bar to finishing rolling in the temperature range of 790-800°C at a cumulative rolling reduction of 75%, ii) a cooling step including primary cooling in which cooling is started immediately after the completion of the finishing rolling, and the steel sheet is cooled to the coiling temperature at an average cooling rate of 5 or more °C/s (9-11 °C/s), iii) a coiling step including coiling the steel sheet at a coiling temperature of 500°C to 600°C.


[Citation List]


[Patent Literature]


[PTL 1] Japanese Unexamined Patent Application Publication No. 63-227715
[PTL 2] Japanese Unexamined Patent Application Publication No. 10-176239
[PTL 3] Japanese Unexamined Patent Application Publication No. 2006-299413
[PTL 4] Japanese Unexamined Patent Application Publication No. 2010-59472
[PTL 5] European Patent Application EP 2 133 441 A1


[Summary of Invention]


[Technical Problem]


However, the technique described in Patent Literature 1 has problems in which the cooling rate, the cooling stop temperature, and so forth need to be controlled to a predetermined relatively rapid cooling range, and in particular, a large-scale cooling apparatus and so forth are required in order to produce a thick hot rolled steel sheet. In addition, the hot rolled steel sheet obtained by the technique described in Patent Literature 1 disadvantageously has a microstructure mainly containing soft polygonal ferrite, so that desired high strength is not easily provided. The technique described in Patent Literature 2 has a problem in which, as described in Table 2 of Patent Literature 2, the yield strength reduces after pipe production, so that the current demand for the increase in steel pipe strength is not satisfied, in some cases.

The technique described in Patent Literature 3 has the following problems: Massive martensite is not formed because of an average cooling rate of 5 °C/sec. or more, so the effect of the present invention is not provided. It is thus difficult to stably ensure excellent low-temperature toughness, i.e., a fracture transition temperature vTrs of -80°C or lower and preferably -95°C or lower, which is a current specification for very cold lands.

The thick steel sheet obtained by the technique described in Patent Literature 4 has only low toughness, i.e., the fracture transition temperature vTrs is about - 30°C to about -41°C at best, as described in Table 6 of Patent Literature 4. Thus, the thick steel sheet does not address the current demand for further improvement in toughness, which is a problem.

It is an object of the present invention to overcome the problems in the related art and provide a low yield ratio and high-strength hot rolled steel sheet with high toughness without performing complex heat treatment or extensive modification of facilities, the low yield ratio and high-strength hot rolled steel sheet being suited to a material for a steel pipe, in particular, a spiral steel pipe, and being able to prevent a reduction in strength after spiral pipe production.

The "high strength" used here indicates the case where the yield strength in a direction inclined at an angle of 30° with respect to a rolling direction is 480 MPa or more and where the tensile strength in a width direction of the sheet is 600 MPa or more. The reason the yield strength in the direction inclined at an angle of 30° with respect to the rolling direction is specified to be 480 MPa or more is that the circumferential direction of a spiral steel pipe is inclined at an angle of 30° to 40° with respect to the rolling direction of the hot rolled steel sheet and that the yield strength of the spiral steel pipe in the circumferential direction is improved.

The "high toughness" indicates the case where the fracture transition temperature vTrs in a Charpy impact test is -80°C or lower, and preferably -95°C or lower. The "low yield ratio" indicates the case where the stress-strain curve is of a continuous yield type and where the yield ratio is 85% or less. The "steel sheet" includes a steel sheet and a steel strip.

[Solution to Problem]

To achieve the foregoing object, the inventors have conducted intensive studies on various factors affecting steel pipe strength and steel pipe toughness after pipe production and have found that the reduction in strength due to pipe production is caused by a reduction in yield strength due to the Bauschinger effect on the inner surface side of a pipe subjected to compressive stress and by the disappearance of yield elongation on the outer surface side of the pipe subjected to tensile stress.

The inventors have conducted further studies and have conceived that in the case where a steel sheet has a microstructure of fine bainitic ferrite, serving as a main phase, and hard massive martensite that is finely dispersed in the bainitic ferrite, it is possible to prevent a reduction in strength after pipe production, in particular, after spiral pipe production and to provide a steel pipe having a low yield ratio of 85% or less and excellent toughness. The reason for this is that this structure improves the work hardening ability of the steel sheet serving as a material for a steel pipe. Thus, it has been found that a sufficient increase in strength can be provided by work hardening on the outer surface side of a pipe during pipe production, a reduction in strength after pipe production, in particular, spiral pipe production, can be inhibited, and the fine dispersion of massive martensite significantly improves toughness.

The present invention has been accomplished by conducting further studies on the basis of the findings. That is, the outline of the present invention will be described below.

(1) A low yield ratio and high-strength hot rolled steel sheet with excellent low-temperature toughness has a composition containing, on a mass percent basis, 0.03% to 0.10% C, 0.10% to 0.50% Si, 1.4% to 2.2% Mn, 0.025% or less P, 0.005% or less S, 0.005% to 0.10% Al, 0.02% to 0.10% Nb, 0.001% to 0.030% Ti, 0.05% to 0.50% Mo, 0.05% to 0.50% Cr, 0.01% to 0.50% Ni, and further optionally one or more selected from 0.50% or less Cu; 0.10% or less V; 0.0005% or less B; and 0.0005% to 0.0050% Ca, and the balance being Fe and incidental impurities, and a microstructure including a main phase that contains bainitic ferrite and a secondary phase that contains massive martensite having an aspect ratio of less than 5.0 in an area ratio of 1.4% to 15%, in which the average grain size of the bainitic ferrite is 10 $\mu$m or less, wherein the composition is such that Moeq defined by expression (1) described below satisfies the range of 1.5% to 2.2% by mass,

$$\mathrm{Moeq}\ (\%)\ =\ \mathrm{Mo}\ +\ 0.36\mathrm{Cr}\ +\ 0.77\mathrm{Mn}\ +\ 0.07\mathrm{Ni} \qquad (1)$$

(where Mn, Ni, Cr, and Mo represent the respective contents (% by mass)).

(2) The low yield ratio and high-strength hot rolled steel sheet described in item (1), wherein the massive martensite has a maximum size of 5.0 $\mu$m or less and an average size of 0.5 to 3.0 $\mu$m.

(3) A method for producing a low yield ratio and high-strength hot rolled steel sheet with excellent low-temperature toughness includes subjecting a steel to a hot rolling step, a cooling step, and a coiling step to provide a hot rolled steel sheet, in which the steel has a composition according to (1),

the hot rolling step includes heating the steel to a heating temperature of 1050°C to 1300°C, subjecting the heated steel to rough rolling to form a sheet bar, and subjecting the sheet bar to finishing rolling in the temperature range of 930°C or lower at a cumulative rolling reduction of 50% or more to provide a hot rolled steel sheet, the cooling step includes starting cooling immediately after the completion of the finishing rolling,

cooling the steel sheet to a cooling stop temperature in the temperature range of 600°C to 450°C at an average cooling rate of 5 to 30 °C/s, the average cooling rate being measured at the middle portion of the sheet in the thickness direction, and cooling the steel sheet from the cooling stop temperature to a coiling temperature at an average cooling rate of 2 °C/s or lower or holding the steel sheet in the temperature range of the cooling stop temperature to the coiling temperature for a holding time of 20 s or more, and the coiling step includes coiling the steel sheet at a coiling temperature of 450°C or higher, the coiling temperature being based on a surface temperature, wherein the composition is such that Moeq defined by expression (1) described below satisfies the range of 1.5% to 2.2% by mass,

$$Moeq~(\%) = Mo + 0.36Cr + 0.77Mn + 0.07Ni \qquad (1)$$

(where Mn, Ni, Cr, and Mo represent the respective contents (% by mass)).

[Advantageous Effects of Invention]

According to the present invention, a low yield ratio and high-strength hot rolled steel sheet with excellent low-temperature toughness can be easily and inexpensively produced without performing special heat treatment, the steel sheet being particularly suited to a material for spiral steel pipes, exhibiting only a slight reduction in strength after pipe production, and having a YS of 480 MPa or more in a direction inclined at an angle of 30° with respect to a rolling direction, a tensile strength of 600 MPa or more in the width direction of the sheet, a fracture transition temperature vTrs of -80°C or lower, which is determined by a Charpy impact test, and a yield ratio of 85% or less, which provides industrially marked effects. The present invention also allows for inexpensive and easy production of linepipes installed by a reel barge method and electric resistance welded steel pipes for linepipes required to achieve earthquake protection. Furthermore, when a low yield ratio and high-strength hot rolled steel sheet of the present invention is used as a material, a high-strength spiral steel pipe pile, which serves as a construction member with excellent earthquake protection, can be advantageously produced.

[Brief Description of Drawings]

Fig. 1 is a schematic explanatory drawing illustrating the relationship between the formation of massive martensite and secondary cooling in cooling after hot rolling.
Fig. 2 illustrates the relationship between the area ratio of massive martensite and the yield ratio (YR) of a steel sheet.

[Description of Embodiments]

The reason for the limitation of the composition of a hot rolled steel sheet of the present invention will be described. Hereinafter, "% by mass" is simply expressed by "%" unless otherwise specified.

C: 0.03% to 0.10%

C is an element which precipitates as a carbide, which contributes to an increase in the strength of the steel sheet due to precipitation strengthening, and which contributes to an improvement in the toughness of the steel sheet due to a reduction in the size of crystal grains. Furthermore, C has the effect of stabilizing austenite and promoting the formation of untransformed austenite by dissolution in steel. To provide the effect, a C content of 0.03% or more is required. A C content of more than 0.10% is more liable to cause the formation of coarse cementite at crystal grain boundaries, thereby reducing the toughness. Accordingly, C is limited to the range of 0.03% to 0.10% and preferably 0.04% to 0.09%.

Si: 0.10% to 0.50%

Si contributes to an increase in the strength of the steel sheet by solid solution strengthening and also contributes to a reduction in yield ratio by the formation of a hard second phase (for example, martensite). To provide the effects, a Si content of 0.10% or more is required. A Si content of more than 0.50% results in a significant formation of red scale, thereby reducing the appearance of the steel sheet. Accordingly, Si is limited to the range of 0.10% to 0.50% and preferably 0.20% to 0.40%.

Mn: 1.4% to 2.2%

Mn is an element which improves the hardenability of steel to promote the formation of martensite by dissolution and which reduces the transformation start temperature of bainitic ferrite to contribute to an improvement in steel sheet toughness by a reduction in the size of a microstructure. To provide the effects, a Mn content of 1.4% or more is required. A Mn content of more than 2.2% results in a reduction in the toughness of a welded heat-affected zone. Accordingly, Mn is limited to the range of 1.4% to 2.2%. From the viewpoint of the stable formation of massive martensite, the Mn content is preferably 1.6% to 2.0%.

P: 0.025% or less

P contributes to an increase in steel sheet strength by dissolution but also reduces the toughness. Thus, in the present invention, P is preferably minimized as an impurity. However, a P content of up to 0.025% is allowable. The P content is preferably 0.015% or less. An excessive reduction in P content increases the refining cost. Thus, the P content is desirably about 0.001% or more.

S: 0.005% or less

S forms coarse sulfide system inclusions, such as MnS, in steel, thereby causing cracking of a slab and reducing the ductility of the steel sheet. This phenomenon becomes pronounced at a S content of more than 0.005%. Accordingly, S is limited to 0.005% or less and preferably 0.004% or less.

Al: 0.005% to 0.10%

Al is an element which acts as a deoxidizing agent and which is effective in stabilizing N that causes strain aging. To provide the effects, an Al content of 0.005% or more is required. An Al content of more than 0.10% results in an increase in the amount of an oxide in steel, thereby reducing the toughness of a matrix and a welded zone. Furthermore, when steel or the steel sheet, such as a slab, is heated in a heating furnace, a nitrided layer is liable to be formed on a surface layer, thus possibly causing an increase in yield ratio. Accordingly, Al is limited to the range of 0.005% to 0.10% and preferably 0.08% or less.

Nb: 0.02% to 0.10%

Nb dissolves in steel or precipitates as a carbonitride. As a result, Nb has the effect of inhibiting the coarsening of austenite grains and the recrystallization of austenite grains. This enables austenite to be subjected to hot-rolling in an un-recrystallized temperature region. Furthermore, Nb is an element which precipitates as a fine carbide or carbonitride to contribute to an increase in the strength of the steel sheet. Nb precipitates as a carbide or a carbonitride during cooling after hot rolling on a dislocation due to the hot rolling to act as the nucleus of $\gamma \to \alpha$ transformation. This promotes the formation of bainitic ferrite in grains and contributes to the formation of massive fine untransformed austenite and massive fine martensite. To provide the effects, a Nb content of 0.02% or more is required. A Nb content of more than 0.10% can result in an increase in deformation resistance during hot rolling, thereby causing difficulty in performing hot rolling. Furthermore, an excessive Nb content of more than 0.10% leads to an increase in the yield strength of bainitic ferrite serving as a main phase. It is thus difficult to ensure a yield ratio of 85% or less. Accordingly, Nb is limited to the range of 0.02% to 0.10% and preferably 0.03% to 0.07%.

Ti: 0.001% to 0.030%

Ti stabilizes N in the form of a nitride to contribute to the prevention of a slab crack and has the effect of increasing steel sheet strength by precipitation in the form of a fine carbide. To provide the effects, a Ti content of 0.001% or more is required. A high Ti content of more than 0.030% results in an excessive increase in the transformation temperature of bainitic ferrite and a reduction in the toughness of the steel sheet. Thus, Ti is limited to the range of 0.001% to 0.030% and preferably 0.005% to 0.025%.

Mo: 0.05% to 0.50%

Mo contributes to an improvement in hardenability. Mo has the effect of promoting the formation of martensite by drawing C in bainitic ferrite into untransformed austenite to improve the hardenability of untransformed austenite. Furthermore, Mo dissolves in steel and contributes to an increase in steel sheet strength by solid solution strengthening.

To provide the effects, a Mo content of 0.05% or more is required. A Mo content of more than 0.50% results in the formation of martensite more than necessary, thereby reducing the toughness of the steel sheet. In addition, Mo is an expensive element, so a high Mo content leads to an increase in material cost. Accordingly, Mo is limited to the range of 0.05% to 0.50% and preferably 0.10% to 0.40%.

Cr: 0.05% to 0.50%

Cr has the effects of delaying $\gamma$ (austenite) $\rightarrow$ $\alpha$ (ferrite) transformation, contributing to an improvement in hardenability, and promoting the formation of martensite. To provide the effects, a Cr content of 0.05% or more is required. A Cr content of more than 0.50% is more liable to cause a defect in a welded zone. Accordingly, Cr is limited to the range of 0.05% to 0.50% and preferably 0.20% to 0.45%.

Ni: 0.01% to 0.50%

Ni is an element which contributes to an improvement in hardenability, which promotes the formation of martensite, and which contributes to an improvement in toughness. To provide the effects, a Ni content of 0.01% or more is required. Even if the Ni content is more than 0.50%, the effects are saturated, so no effect commensurate with the content is provided, which is economically disadvantageous. Accordingly, Ni is limited to the range of 0.01% to 0.50% and preferably 0.30% to 0.45%.

The foregoing composition is a basic composition. In the present invention, the foregoing composition is within the foregoing ranges and are preferably adjusted in such a manner that Moeq defined by expression (1) described below is in the range of 1.5 % to 2.2%,

$$Moeq~(\%)~=~Mo~+~0.36Cr~+~0.77Mn~+~0.07Ni \qquad (1)$$

(where Mn, Ni, Cr, and Mo represent the respective contents (% by mass)).

Moeq is an index of the hardenability of untransformed austenite remaining in the steel sheet after a cooling step. When Moeq is less than 1.5%, the hardenability of untransformed austenite is insufficient and thus is transformed into, for example, pearlite during the subsequent coiling step. When Moeq is more than 2.2%, martensite is formed more than necessary, reducing the toughness. Accordingly, Moeq is limited to the range of 1.5% to 2.2%. When Moeq is 1.5% or more, the yield ratio is low, thereby resulting in a further improvement in deformability. Therefore, Moeq is 1.5% or more.

In the present invention, the steel sheet has the foregoing composition within the foregoing ranges. If necessary, the steel sheet may further contain one or more optional elements selected from 0.50% or less Cu, 0.10% or less V, and 0.0005% or less B, and/or 0.0005% to 0.0050% Ca.

One or more optional elements selected from 0.50% or less Cu, 0.10% or less V, and 0.0005% or less B

Cu, V, and B each contribute to an increase in the strength of the steel sheet and may be selectively contained, as needed.

Cu and V contribute to the increase in the strength of the steel sheet by solid solution strengthening or precipitation strengthening. B segregates at crystal grain boundaries to improve the hardenability, thereby contributing to the increase in the strength of the steel sheet. To provide the effects, the steel sheet preferably has a Cu content of 0.01% or more, a V content of 0.01% or more, and a B content of 0.0001% or more. A V content of more than 0.10% results in a reduction in weldability. A B content of more than 0.0005% results in the toughness of the steel sheet. A Cu content of more than 0.50% results in a reduction in hot workability. Accordingly, when these elements are contained, the Cu content, the V content, and the B content are preferably limited to 0.50% or less, 0.10% or less, and 0.0005% or less, respectively.

Ca: 0.0005% to 0.0050%

Ca is an element which contributes to the morphology control of sulfide in which coarse sulfide is formed into spherical sulfide and may be contained, as needed. To provide the effect, it is preferable to contain 0.0005% or more Ca. A Ca content of more than 0.0050% results in a reduction in the cleanness of the steel sheet. Accordingly, when Ca is contained, the Ca content is preferably limited to the range of 0.0005% to 0.0050%.

The remainder other than the foregoing composition is composed of Fe and incidental impurities. With respect to the incidental impurities, 0.005% or less N, 0.005% or less O, 0.003% or less Mg, and 0.005% or less Sn are allowable.

The reason for the limitation of the microstructure of the hot rolled steel sheet of the present invention will be described below.

The hot rolled steel sheet of the present invention has the foregoing composition and a microstructure containing bainitic ferrite serving as a main phase and a secondary phase.

The "main phase" used here indicates a phase having an area ratio of 50% or more. Bainitic ferrite serving as the main phase is a phase having a substructure with a high dislocation density and includes acicular ferrite. Bainitic ferrite does not include polygonal ferrite with an extremely low dislocation density or quasi-polygonal ferrite having a substructure, such as fine sub-grains. To ensure desired high strength, a fine carbonitride is required to be precipitated in bainitic ferrite serving as the main phase.

Bainitic ferrite serving as the main phase has an average grain size of 10 μm or less. A large average grain size of more than 10 μm results in insufficient work hardenability in a region with a low strain of less than 5%. The yield strength may reduce by bending work in spiral pipe production. Accordingly, the average grain size of bainitic ferrite serving as the main phase is limited to 10 μm or less. When the main phase has a fine average grain size, it is possible to ensure desired low-temperature toughness even if a large amount of martensite is contained.

The hot rolled steel sheet of the present invention has a microstructure, serving as the secondary phase, in which massive martensite with an aspect ratio of less than 5.0 is dispersed in an area ratio of 1.4% to 15%. The massive martensite used in the present invention indicates martensite formed from untransformed austenite at prior austenite grain boundaries or in prior austenite grain in the course of cooling after hot rolling. In the present invention, the massive martensite is dispersed at the prior austenite grain boundaries or between grains of bainitic ferrite serving as the main phase. The martensite is harder than the main phase. Thus, a large number of mobile dislocations can be introduced into bainitic ferrite during processing. The yield behavior is of a continuous yield type. Furthermore, the martensite has higher tensile strength than the bainitic ferrite and thus achieves a low yield ratio. Since the massive martensite has an aspect ratio of less than 5.0, a larger number of mobile dislocations can be introduced into surrounding bainitic ferrite. This results in an improvement in deformability. When the martensite has a large aspect ratio of more than 5.0, rod-like martensite (non-massive martensite) is provided. In this case, the desired low yield ratio is not achieved. However, when the rod-like martensite has an area ratio of less than 30% with respect to the total amount of martensite, the rod-like martensite is allowable. The massive martensite preferably has an area ratio of 70% or more with respect to the total amount of martensite.

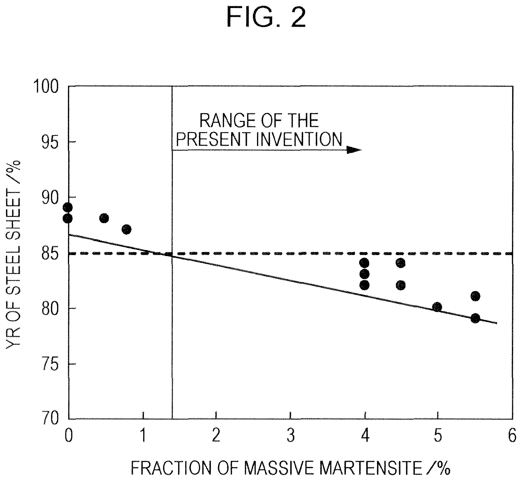

To ensure the effects, the massive martensite with an area ratio of 1.4% or more is required to be dispersed. Fig. 2 illustrates the relationship between the area ratio of massive martensite and the yield ratio (YR) of a steel sheet obtained from data of examples Tables 3-1 and 3-2. As illustrated in Fig. 2, when the massive martensite is less than 1.4%, it is difficult to ensure a desired low yield ratio of 85% or less.

When the area ratio of the massive martensite is more than 15%, the low-temperature toughness markedly reduces. Accordingly, the massive martensite is limited to the range of 1.4% to 15% and preferably 10% or less.

The massive martensite preferably has a maximum size of 5 μm or less and an average size of 0.5 to 3.0 μm. When the massive martensite has a large average size of more than 3.0 μm, the massive martensite is liable to be a starting point of brittle fracture or liable to promote crack propagation, thereby reducing the low-temperature toughness. When the massive martensite has an average size of less than 0.5 μm, the grains are excessively small, so that the number of mobile dislocations introduced into surrounding bainitic ferrite reduces. Accordingly, the massive martensite preferably has a maximum size of 5 μm or less and an average size of 0.5 to 3.0 μm. Regarding the size, 1/2 of the sum of the length of the long side and the length of the short side is defined as a "diameter". The maximum diameter is defined as a "maximum". The arithmetic average of the "diameters" of grains is defined as an "average". The number of martensite grains measured is 100 grains or more.

A method for producing a hot rolled steel sheet of the present invention will be described below.

In the present invention, a steel having the foregoing composition is subjected to a hot rolling step, a cooling step, and a coiling step to provide a hot rolled steel sheet.

A method for producing steel used need not be particularly limited. Preferably, a molten steel having the foregoing composition is formed by a known method with, for example, a converter or an electric furnace, and then the molten steel is formed into steel, such as a slab, by a known method, such as a continuous casting process.

The resulting steel is subjected to the hot rolling step.

The hot rolling step includes heating a steel having the foregoing composition to a heating temperature of 1050°C to 1300°C, subjecting the steel to rough rolling to form a sheet bar, and subjecting the sheet bar to finishing rolling in the temperature range of 930°C or lower at a cumulative rolling reduction of 50% or more to provide a hot rolled steel sheet.

Heating temperature: 1050°C to 1300°C

Steel used in the present invention essentially contains Nb and Ti as described above. To ensure desired high strength due to precipitation strengthening, it is necessary to temporarily dissolve, for example, coarse carbides and nitride thereof and then perform fine precipitation. Thus, the heating temperature of the steel is 1050°C or higher. At a heating temperature of less than 1050°C, each of the elements remains undissolved, thereby failing to provide the desired steel sheet strength. A high heating temperature of more than 1300°C results in the coarsening of the crystal grains, thereby reducing the steel sheet toughness. Accordingly, the heating temperature of the steel is limited to 1050°C to 1300°C.

The steel heated to the heating temperature described above is subjected to rough rolling to form a sheet bar. Conditions of the rough rolling are not particularly limited as long as the sheet bar with desired dimensions and shape is ensured.

The resulting sheet bar is then subjected to finishing rolling to form a hot rolled steel sheet with desired dimensions and shape. The finishing rolling is preferably performed in the temperature range of 930°C or lower at a cumulative rolling reduction of 50% or more.

Cumulative rolling reduction of 50% or more in temperature range of 930°C or lower

To achieve a reduction in the size of bainitic ferrite and fine dispersion of massive martensite, the cumulative rolling reduction is set to 50% or more in the temperature range of 930°C or lower. When the cumulative rolling reduction is less than 50% in the temperature range of 930°C or lower, the rolling reduction is not sufficient, thereby failing to ensure fine bainitic ferrite serving as the main phase. Furthermore, dislocations that serve as precipitation sites of, for example, NbC that promotes the nucleation of $\gamma$(austenite) $\rightarrow$ $\alpha$(ferrite) transformation are lacking, so the formation of bainitic ferrite is lacking. As a result, massive untransformed $\gamma$ to form massive martensite cannot remain while a large amount of the massive untransformed $\gamma$ is finely dispersed. Accordingly, the cumulative rolling reduction is limited to 50% or more in the temperature range of 930°C or lower during the finishing rolling. Preferably, the cumulative rolling reduction is 80% or less. Even if the cumulative rolling reduction is increased to more than 80%, the effect is saturated. Furthermore, separation occurs significantly, thereby leading to a reduction in Charpy absorbed energy.

The finish rolling temperature of the finishing rolling is preferably 850°C to 760°C from the viewpoint of the steel sheet toughness, the steel sheet strength, the rolling load, and so forth. When the finish rolling temperature of the finishing rolling is a high temperature, i.e., higher than 850°C, the amount of rolling reduction per pass needs to be increased in order to achieve a cumulative rolling reduction of 50% or more in the temperature range of 930°C or lower, thereby leading to an increase in rolling load. At a low temperature of less than 750°C, ferrite is formed during the rolling to lead to the coarsening of the microstructure and precipitates, thereby reducing the low-temperature toughness and strength.

Subsequently, the resulting hot rolled steel sheet is subjected to a cooling step.

The cooling step includes primary cooling in which cooling is started immediately after the completion of the finishing rolling, and the steel sheet is cooled to a cooling stop temperature in the temperature range of 600°C to 450°C, which is measured at the middle portion of the sheet in the thickness direction, at an average cooling rate of 5 to 30 °C/sec., which is measured at the middle portion of the sheet in the thickness direction; and secondary cooling in which the steel sheet is cooled from the cooling stop temperature to a coiling temperature at an average cooling rate of 2 °C/sec. or lower or in which the steel sheet is held in the temperature range of the cooling stop temperature to the coiling temperature for a holding time of 20 seconds or more.

After the completion of the finishing rolling, cooling is started immediately, preferably within 15 seconds. The cooling rate of the primary cooling is 5 to 30 °C/sec. in the temperature range of 750°C to 600°C, which is measured at the middle portion of the sheet in the thickness direction. An average cooling rate of less than 5 °C/sec. results in a microstructure mainly containing polygonal ferrite. In this case, it is difficult to ensure a desired microstructure containing bainitic ferrite serving as the main phase. When the average cooling rate is more than 30 °C/sec., i.e., rapid cooling is performed, the enrichment of an alloying element in untransformed austenite is insufficient. As a result, the fine dispersion of a desired amount of massive martensite is not achieved in the subsequent cooling, thus causing difficulty in providing a hot rolled steel sheet with a desired low yield ratio and desired excellent low-temperature toughness. Furthermore, when the average cooling rate is more than 30 °C/sec., i.e., when rapid cooling is performed, a surface portion has a martensite single-phase microstructure. Then tempering is performed to provide a tempered martensite single-phase microstructure, increasing the yield ratio. Accordingly, the average cooling rate after the completion of the finishing rolling is limited to the range of 5 to 30 °C/sec. and preferably 5 to 25 °C/sec.

The cooling stop temperature of the foregoing cooling is in the temperature range of 600°C to 450°C. When the cooling stop temperature is higher than the foregoing temperature range, it is difficult to ensure the desired microstructure containing bainitic ferrite serving as the main phase. When the cooling stop temperature is lower than the foregoing temperature range, untransformed $\gamma$ is almost completely transformed, thus failing to ensure a desired amount of massive martensite.

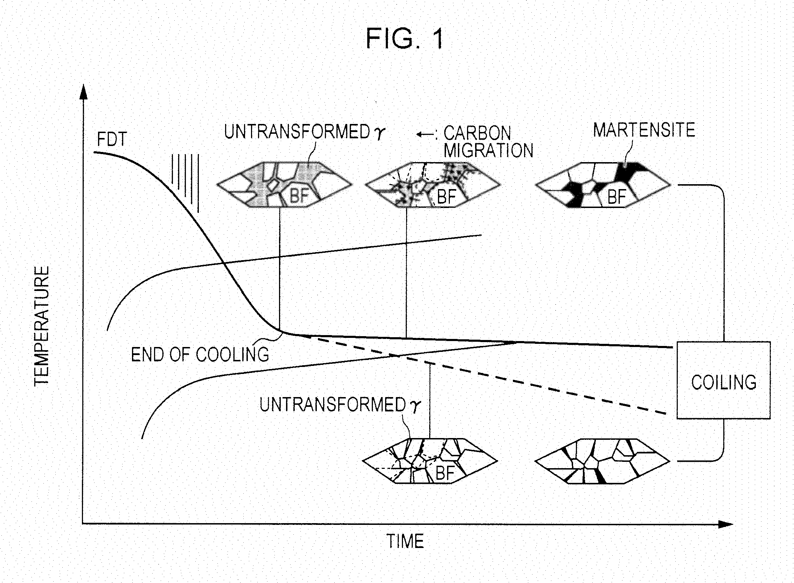

In the present invention, as the secondary cooling subsequent to the foregoing primary cooling, cooling in the temperature range of the cooling stop temperature to the coiling temperature is slow cooling as schematically illustrated in Fig. 1. When the slow cooling is performed in this temperature range, alloying elements, such as C, are further dispersed into untransformed $\gamma$ to stabilize the untransformed $\gamma$. The subsequent cooling facilitates the formation of massive martensite. The slow cooling is performed from the cooling stop temperature to the coiling temperature at an average cooling rate of 2 °C/sec. or less and preferably 1.5 °C/sec. or less. Alternatively, the slow cooling is performed in such a manner that the steel sheet is held in the temperature range of the cooling stop temperature to the coiling temperature for a holding time of 20 seconds or more. When cooling is performed from the cooling stop temperature to the coiling temperature at an average cooling rate of more than 2 °C/sec., alloy elements, such as C, are not sufficiently dispersed in untransformed γ. This leads to the insufficient stability of the untransformed γ. As with cooling indicated by a dashed line in Fig. 1, the untransformed γ remains between bainitic ferrite grains and is formed into rod-like martensite. It is thus difficult to form desired massive martensite. Note that this is substantially the same method as that of Patent Literature 3.

The secondary cooling is preferably performed while water injection at a portion downstream of a runout table is stopped. In the case of a steel sheet having a thin thickness, cooling is preferably adjusted by, for example, the complete removal of cooling water remaining on the steel sheet or the arrangement of a thermal insulation jacket in order to ensure desired cooling conditions. To ensure a holding time of 20 seconds or more in the foregoing temperature range, the transportation speed is preferably adjusted.

After the secondary cooling, the hot rolled steel sheet is subjected to a coiling step.

The coiling step includes coiling the steel sheet at a coiling temperature of 450°C or higher, the coiling temperature being based on a surface temperature. At a coiling temperature of less than 450°C, it is impossible to achieve a desired low yield ratio. Accordingly, the coiling temperature is limited to 450°C or higher. In the case of performing the foregoing step, the steel sheet can be held for a predetermined holding time or more in a temperature range where ferrite and austenite coexist. The hot rolled steel sheet produced by the foregoing production method is used as a material for pipe production and is formed by a common pipe production process into spiral steel pipes and electric resistance welded steel pipes. The pipe production process need not be particularly limited. Any of common processes may be employed.

The present invention will be described in more detail below on the basis of examples.

[EXAMPLES]

Molten steels having compositions described in Table 1 were formed by a continuous casting process into slabs (thickness: 220 mm), which served as steel slabs. Each of the steel slabs was subjected to a hot rolling step that includes heating the steel to a heating temperature described in Table 2, subjecting the steel to rough rolling to form a sheet bar, and subjecting the sheet bar to finishing rolling under conditions described in Table 2 to form a hot rolled steel sheet (thickness: 7.8 to 25.4 mm). Cooling of the resulting hot rolled steel sheet was started immediately after the completion of the finishing rolling (within a time described in Table 2). The hot rolled steel sheet was subjected to a cooling step including primary cooling in which cooling was performed at an average cooling rate described in Table 2 to a cooling stop temperature (coiling temperature) described in Table 2, and secondary cooling that was performed under conditions described in Table 2. After the cooling step, the steel sheet was subjected to a coiling step that includes coiling the steel sheet at a coiling temperature described in Table 2 and then allowing the resulting coil to cool.

Test pieces were taken from the resulting hot rolled steel sheets. Microstructure observation, a tensile test, and an impact test were performed. Test methods are described below.

(1) Microstructure observation

Test pieces for microstructure observation were taken from the resulting hot rolled steel sheets in such a manner that a cross section parallel to a rolling direction (L section) was used as an observation surface. The test pieces were subjected to polishing, nital etching, and microstructure observation with an optical microscope (magnification: ×500) or an electron microscope (magnification: ×2000). Images of the test pieces were captured. The type of microstructure, the fraction (area ratio) of the microstructure of each phase, and the average grain size were measured with an image analysis device. The average grain size of bainitic ferrite serving as the main phase was determined by a cutting method according to JIS G 0552. The aspect ratio of each martensite grain is calculated from the ratio of a length (long side) in the longitudinal direction to a length (short side) in a direction perpendicular to the longitudinal direction of each grain, i.e., (long side)/(short side). A martensite grain having an aspect ratio of less than 5.0 is defined as massive martensite. A martensite grain having an aspect ratio of 5.0 or more is referred to as "rod-like" martensite. Regarding the size of massive martensite, 1/2 of the sum of the length of the long side and the length of the short side of grains of massive martensite was defined as a diameter. The arithmetic average of the diameters of the grains was defined as the average of massive martensite in a steel sheet. The maximum value of the diameter of each grain of massive martensite was defined as the maximum size of massive martensite. The number of martensite grains measured was 100 grains or more.

(2) Tensile test

Tensile test pieces (full-thickness test pieces specified in API-5L, GL: 50 mm, width: 38.1 mm) were taken from the resulting hot rolled steel sheets in such a manner that tensile directions were a direction (width direction of the sheet) perpendicular to a rolling direction and a direction inclined at an angle of 30° with respect to the rolling direction. A tensile test was performed in accordance with the ASTM A 370 specification to determine tensile properties (yield strength YS and tensile strength TS) .

(3) Impact test

V-notched test pieces were taken from the resulting hot rolled steel sheets in such a manner that the longitudinal direction of each of the test pieces is perpendicular to the rolling direction. A Charpy impact test was performed in accordance with ASTM A 370 specification to determine a fracture transition temperature vTrs (°C).

Tables 3-1 and 3-2 describe the results.

Spiral steel pipes (external diameter: 1067 mm) were produced by a process for producing a spiral steel pipe using the resulting hot rolled steel sheets as materials for pipes. Tensile test pieces (test pieces specified in API) were taken from the resulting steel pipes in such a manner that a tensile direction was the circumferential direction of each of the pipes. A tensile test was performed in accordance with ASTM A 370 specification to measure tensile properties (yield strength YS and tensile strength TS). ΔYS (= YS of steel sheet - YS of steel pipe) was calculated from the results to evaluate the degree of a reduction in strength due to pipe production.

Tables 3-1 and 3-2 also describe the results. Fig. 2 illustrates the relationship between the area ratio of massive martensite and the yield ratio (YR) of a steel sheet obtained from data of examples described in Tables 3-1 and 3-2. As illustrated in Fig. 2, in the case of a massive martensite content of less than 1.4%, it is difficult to ensure a desired low yield ratio of 85% or less.

In any of inventive examples, a low yield ratio, high-strength, and high-toughness hot rolled steel sheet is produced without performing special heat treatment, the steel sheet having a yield strength of 480 MPa or more in the direction inclined at an angle of 30° with respect to the rolling direction, a tensile strength of 600 MPa or more in the width direction of the sheet, a fracture transition temperature vTrs of -80°C or lower, and a low yield ratio of 85% or less.

In any of the inventive examples, after the hot rolled steel sheet is formed into the steel pipe, only a slight reduction in strength (ΔYS) due to pipe production is measured. Thus, the hot rolled steel sheet is suitable as a material for spiral steel pipes or electric resistance welded steel pipes.

In each of the comparative examples outside the range of the present invention, the hot rolled steel sheet has insufficient yield strength, low tensile strength, low toughness, or does not have a low yield ratio. Thus, the hot rolled steel sheet does not have desired properties.

The comparative examples will be specifically described below.

In steel sheet No. 7 of the comparative example, the heating temperature exceeds the range of the present invention. Thus, the average grain size of bainitic ferrite exceeds the range of the present invention, thereby reducing the toughness.

In steel sheet No. 8 of the comparative example, the average cooling rate during the secondary cooling in the cooling step exceeds the range of the present invention, so the area ratio of massive martensite is lower than the range of the present invention. Thus, YR exceeds the range of the present invention, thereby increasing the reduction in strength (ΔYS).

In steel sheet No. 9 of the comparative example, the cumulative rolling reduction is lower than the range of the present invention. The average cooling rate during the secondary cooling in the cooling step is lower than the range of the present invention. Thus, the average grain size of bainitic ferrite exceeds the range of the present invention, thereby reducing the toughness.

In steel sheet No. 10 of the comparative example, the average cooling rate during the primary cooling in the cooling step exceeds the range of the present invention, so the area ratio of massive martensite is lower than the range of the present invention. Thus, the yield ratio YR exceeds the range of the present invention, thereby increasing the reduction in strength (ΔYS).

In each of steel sheet Nos. 11 and 12 of the comparative examples, the cooling stop temperature in the primary cooling of the cooling step is outside the range of the present invention, thereby failing to the formation of massive martensite. Thus, the yield ratio YR exceeds the range of the present invention, thereby increasing the reduction in strength (ΔYS).

In each of steel sheet Nos. 18 to 21 and 23 of the comparative examples, the chemical composition is outside the range of the present invention. As a result, the average grain size of bainitic ferrite exceeds the range of the present invention, or the area ratio of massive martensite is lower than the range of the present invention. Thus the yield ratio YR exceeds the range of the present invention, thereby increasing the reduction in strength (ΔYS) .

In steel sheet No. 22 of the comparative example, the proportion of Nb in the chemical composition is outside the range of the present invention, so the yield strength is increased. Thus, the yield ratio exceeds the range of the present invention, thereby increasing the reduction in strength (ΔYS).

[Table 1]

| Steel No. | Chemical composition (% by mass) | | | | | | | | | | | | | | | Remarks |
|---|---|---|---|---|---|---|---|---|---|---|---|---|---|---|---|---|
| | C | Si | Mn | P | S | At | N | Nb | Ti | Mo | Cr | Ni | V, Cu, B | Ca | Moeq* | |
| A | 0.064 | 0.21 | 1.65 | 0.009 | 0.001 | 0.034 | 0.004 | 0.065 | 0.014 | 0.30 | 0.07 | 0.02 | - | - | 1.60 | Suitable example |
| B | 0.053 | 0.30 | 1.75 | 0.010 | 0.001 | 0.035 | 0.004 | 0.051 | 0.013 | 0.38 | 0.10 | 0.12 | V:0.020 | - | 1.77 | Suitable example |
| C | 0.071 | 0.42 | 1.86 | 0.008 | 0.001 | 0.034 | 0.004 | 0.070 | 0,018 | 0.25 | 0.13 | 0.20 | V:0.038, B:0.0001 | 0.0020 | 1.74 | Suitable example |
| D | 0.042 | 0.46 | 1.45 | 0.009 | 0.001 | 0.039 | 0.004 | 0.033 | 0.020 | 0.31 | 0.48 | 0.05 | V:0.08 | 0.0022 | 1.60 | Suitable example |
| E | 0.082 | 0.38 | 1.91 | 0.011 | 0.001 | 0.042 | 0.003 | 0.092 | 0.009 | 0.26 | 0.41 | 0.10 | B:0.0004 | - | 1.89 | Suitable example |
| F | 0.033 | 0.11 | 2.15 | 0.009 | 0.001 | 0.035 | 0.004 | 0.040 | 0.041 | 0.29 | 0.36 | 0.40 | Cu:0.22 | 0.0023 | 2.10 | Suitable example |
| G | 0.160 | 0.20 | 1.43 | 0.013 | 0.001 | 0.035 | 0.004 | 0.060 | 0.012 | 0.05 | 0.27 | 0.29 | Cu:0.28 | 0.0021 | 1.27 | Comparative example |
| H | 0.045 | 0.35 | 1.20 | 0.009 | 0.001 | 0.051 | 0.004 | 0,045 | 0.010 | 0.31 | 0.25 | 0.40 | V:0.020, B:0.0002 | 0.0023 | 1.35 | Comparative example |
| I | 0.052 | 0.16 | 1.58 | 0.008 | 0.001 | 0.036 | 0.004 | 0.050 | 0.012 | 0.09 | - | - | V:0.052, B:0.0001 | - | 1.31 | Comparative example |
| J | 0.039 | 0.18 | 1.62 | 0.009 | 0.001 | 0.040 | 0.004 | 0.041 | 0.015 | - | - | 0.17 | Cu:0.13, V:0.025 | - | 1.26 | Comparative example |
| K | 0.078 | 0.39 | 1.63 | 0.011 | 0.001 | 0.045 | 0.003 | 0.126 | 0.020 | 0.30 | 0.19 | 0.10 | B:0.0003 | 0.0025 | 1,63 | Comparative example |
| L | 0.064 | 0.21 | 1.65 | 0.009 | 0.001 | 0.034 | 0.004 | 0.055 | 0.069 | 0.17 | 0.28 | 0.10 | - | - | 1.55 | Comparative example |
| M | 0.090 | 0.13 | 1.62 | 0.010 | 0.0008 | 0.035 | 0.003 | 0.051 | 0.014 | 0.10 | 0.05 | 0.01 | V:0.051 | 0.0020 | 1.37 | Compar. example |

*)Moeq (%) = Mo+0.36Cr+0.77Mn+0.07Ni

[Table 2]

| Steel sheet No. | Steel No. | Hot rolling step | | | | | Cooling step | | | | | Coiling step | Remarks |
| | | Heating temperature (°C) | Rough rolling | Finishing rolling | | | Cooling start time (sec) | Primary cooling | | Secondary cooling | | Coiling temperature (°C) | |
| | | | Thickness of sheet bar (mm) | Finishing temperature | Rolling reduction* (%) | Sheet thickness of product | | Average cooling rate** (°C/sec) | Cooling stop temperature*** (°C) | Average cooling rate**** (°C/sec) | Holding time (sec) | | |
|---|---|---|---|---|---|---|---|---|---|---|---|---|---|
| 1 | A | 1070 | 42 | 760 | 70 | 8 | 2.0 | 20 | 580 | 1.5 | 25 | 543 | Inventive example |
| 2 | A | 1120 | 56 | 760 | 55 | 22 | 5.0 | 25 | 595 | 0.5 | 30 | 580 | Inventive example |
| 3 | A | 1150 | 56 | 760 | 60 | 16 | 3.0 | 16 | 500 | 1.0 | 25 | 475 | Inventive example |
| 4 | A | 1200 | 52 | 780 | 65 | 14 | 2.5 | 18 | 590 | 1.0 | 25 | 565 | Inventive example |
| 5 | A | 1250 | 56 | 770 | 55 | 19 | 4.5 | 14 | 560 | 0.5 | 25 | 548 | Inventive example |
| 6 | A | 1230 | 56 | 780 | 60 | 16 | 3.5 | 18 | 590 | - | 30 | 590 | Inventive example |
| 7 | A | <u>1350</u> | 56 | 780 | 60 | 16 | 3.5 | 14 | 580 | 1.0 | 30 | 550 | Comparative example |
| 8 | A | 1120 | 52 | 780 | 60 | 14 | 2.5 | 16 | 590 | <u>3.0</u> | 30 | 500 | Comparative example |
| 9 | A | 1180 | 42 | 830 | 45 | 11 | 3.0 | 20 | 570 | - | 30 | 570 | Comparative example |
| 10 | A | 1250 | 52 | 780 | 65 | 14 | 2.5 | <u>50</u> | 555 | 1.0 | 35 | 520 | Comparative example |
| 11 | A | 1200 | 56 | 770 | 65 | 16 | 3.0 | 14 | <u>675</u> | 1.0 | 25 | 650 | Comparative example |
| 12 | A | 1230 | 60 | 770 | 60 | 21 | 5.0 | 20 | 430 | 0.5 | 35 | 413 | Comparative example |

(continued)

| Steel sheet No. | Steel No. | Hot rolling step | | | | | Cooling step | | | | | Coiling step | Remarks |
|---|---|---|---|---|---|---|---|---|---|---|---|---|---|
| | | Heating temperature (°C) | Rough rolling | Finishing rolling | | | Cooling start time (sec) | Primary cooling | | Secondary cooling | | Coiling temperature (°C) | |
| | | | Thickness of sheet bar (mm) | Finishing temperature | Rolling reduction* (%) | Sheet thickness of product | | Average cooling rate** (°C/sec) | Cooling stop temperature*** (°C) | Average cooling rate**** (°C/sec) | Holding time (sec) | | |
| 13 | B | 1200 | 42 | 800 | 60 | 11 | 3.0 | 22 | 550 | 1.0 | 25 | 525 | Inventive example |
| 14 | C | 1200 | 42 | 800 | 70 | 10 | 2.5 | 24 | 560 | 1.0 | 25 | 535 | Inventive example |
| 15 | D | 1200 | 56 | 800 | 60 | 18 | 4.0 | 13 | 570 | 1.0 | 30 | 540 | Inventive example |
| 16 | E | 1250 | 52 | 780 | 60 | 16 | 4.0 | 14 | 580 | 1.0 | 30 | 550 | Inventive example |
| 17 | F | 1250 | 60 | 820 | 55 | 21 | 5.0 | 12 | 600 | 0.5 | 35 | 583 | Inventive example |
| 18 | G | 1250 | 52 | 790 | 65 | 16 | 4.0 | 14 | 500 | 1.0 | 25 | 475 | Comparative example |
| 19 | H | 1150 | 42 | 810 | 70 | 11 | 3.0 | 20 | 530 | 0.5 | 25 | 518 | Comparative example |
| 20 | I | 1150 | 60 | 780 | 60 | 24 | 5.0 | 10 | 590 | 0.5 | 35 | 573 | Comparative example |
| 21 | J | 1200 | 65 | 780 | 75 | 13 | 3.0 | 18 | 550 | 0.5 | 25 | 538 | Comparative example |
| 22 | K | 1250 | 42 | 820 | 65 | 11 | 3.0 | 12 | 560 | 0.5 | 25 | 548 | Comparative example |
| 23 | L | 1250 | 52 | 800 | 70 | 14 | 4.0 | 16 | 560 | 1.0 | 25 | 535 | Comparative example |

EP 2 735 622 B1

14

(continued)

| Steel sheet No. | Steel No. | Hot rolling step | | | | | Cooling step | | | | | Coiling step | Remarks |
|---|---|---|---|---|---|---|---|---|---|---|---|---|---|
| | | Heating temperature (°C) | Rough rolling | Finishing rolling | | | Cooling start time (sec) | Primary cooling | | Secondary cooling | | Coiling temperature (°C) | |
| | | | Thickness of sheet bar (mm) | Finishing temperature | Rolling reduction* (%) | Sheet thickness of product | | Average cooling rate** (°C/sec) | Cooling stop temperature*** (°C) | Average cooling rate**** (°C/sec) | Holding time (sec) | | |
| 24 | M | 1200 | 42 | 800 | 65 | 14 | 4.0 | 25 | 565 | 0.5 | 30 | 550 | Comparative example |

*) Cumulative rolling reduction in a temperature region of 930°C or lower
**) Average cooling rate from the start to the end of cooling (at the middle portion of the sheet in the thickness direction)
***) Surface temperature
****) Average in the temperature range of the primary cooling stop temperature to the coiling temperature (at the middle portion of the sheet in the thickness direction)
*****) Holding time in the temperature range of the primary cooling stop temperature to the coiling temperature

[Table 3-1]

| Steel sheet No. | Steel No. | Microstructure | | | | | | | | Tensile properties | | | | Toughness | steel pipe strength | | | | Remarks |
|---|---|---|---|---|---|---|---|---|---|---|---|---|---|---|---|---|---|---|---|
| | | Type* | BF Area ratio (%) | BF Average grain size (μm) | Second phase — Massive martensite Area ratio (%) | Average grain size (μm) | Maximum grain size (μm) | Aspect ratio | Area ratio of rod-like martensite**** | Others Type*: Area ratio | YS (MPa) | TS (MPa) | YR (%) | YS** (MPa) | vTrs (°C) | YS (MPa) | TS (MPa) | YR (%) | ΔYS*** (MPa) | |
| 1 | A | BF+M | 95.5 | 3.2 | 4.0 | 1.1 | 3.4 | 4.0 | 0.5 | - | 543 | 654 | 83 | 526 | -115 | 538 | 633 | 85 | 12 | Inventive example |
| 2 | A | BF+M+B | 94.5 | 4.8 | 4.5 | 1.6 | 3.2 | 3.5 | 0.5 | B:0.5 | 590 | 702 | 84 | 569 | -85 | 587 | 674 | 87 | 18 | Inventive example |
| 3 | A | BF+M | 95.5 | 3.5 | 4.0 | 1.2 | 3.6 | 3.5 | 0.5 | - | 593 | 706 | 84 | 580 | -110 | 591 | 684 | 86 | 11 | Inventive example |
| 4 | A | BF+M | 95.0 | 5.4 | 4.5 | 1.6 | 3.0 | 2.5 | 0.5 | - | 622 | 758 | 82 | 626 | -90 | 643 | 735 | 87 | 17 | Inventive example |
| 5 | A | BF+M | 94.0 | 4.1 | 5.5 | 1.4 | 3.8 | 3.0 | 0.5 | - | 581 | 736 | 79 | 554 | -100 | 582 | 714 | 82 | 28 | Inventive example |
| 6 | A | BF+M | 94.5 | 4.3 | 5.0 | 1.5 | 4.2 | 3.0 | 0.5 | - | 603 | 754 | 80 | 579 | -100 | 601 | 727 | 83 | 22 | Inventive example |
| 7 | A | BF+M | 94.0 | 12.4 | 5.5 | 2.5 | 6.0 | 3.0 | 0.5 | - | 601 | 742 | 81 | 581 | -50 | 604 | 715 | 84 | 23 | Comparative example |
| 8 | A | BF+M | 95.0 | 3.8 | 0.5 | 0.7 | 2.2 | 3.0 | 4.5 | - | 620 | 704 | 88 | 580 | -110 | 564 | 680 | 83 | -16 | Comparative example |
| 9 | A | BF+M | 95.0 | 10.9 | 4.0 | 5.3 | 5.5 | 3.0 | 1.0 | - | 595 | 725 | 82 | 578 | -40 | 591 | 703 | 84 | 13 | Comparative example |

(continued)

| Steel sheet No. | Steel No. | Microstructure | | | | | | | | | Tensile properties | | | | Toughness | steel pipe strength | | | | Remarks |
|---|---|---|---|---|---|---|---|---|---|---|---|---|---|---|---|---|---|---|---|---|
| | | | BF | | Second phase | | | | | Others | YS (MPa) | TS (MPa) | YR (%) | YS** (MPa) | vTrs (°C) | YS (MPa) | TS (MPa) | YR (%) | ΔYS*** (MPa) | |
| | | | | | Massive martensite | | | | | | | | | | | | | | | |
| | | Type* | Area ratio (%) | Aver-age grain size (μm) | Area ratio (%) | Aver-age grain size (μm) | Maxi-mum grain size (μm) | Aspect ratio | Area ratio of rod-like mar-tensite**** | Type*: Area ratio | | | | | | | | | | |
| 10 | A | BF+M+B | 96.5 | 2.8 | 0.8 | 0.7 | 1.2 | 2.5 | 0.2 | B:2.5 | 693 | 796 | 87 | 667 | -140 | 651 | 768 | 85 | -16 | Compara-tive exam-ple |
| 11 | A | BF+B | 95.0 | 8.7 | - | - | - | - | - | B:5.0 | 590 | 670 | 88 | 574 | -60 | 531 | 640 | 83 | -43 | Compara-tive exam-ple |
| 12 | A | BF | 100 | 3.6 | - | - | - | - | - | - | 624 | 701 | 89 | 609 | -120 | 535 | 662 | 81 | -74 | Compara-tive exam-ple |

*) F: ferrite, P: pearlite, BF: bainitic ferrite, B: bainite, M: martensite
**) Yield strength in a direction inclined at an angle of 30° with respect to the rolling direction
***) ΔYS = YS of steel sheet - YS of steel pipe
****) Ratio (%) of martensite having an aspect ratio of 5.0 or more with respect to the total amount of martensite

[Table 3-2]

| Steel sheet No. | Steel No. | Microstructure | | | | | | | | | Tensile properties | | | | Toughness | steel pipe strength | | | | Remarks |
|---|---|---|---|---|---|---|---|---|---|---|---|---|---|---|---|---|---|---|---|---|
| | | Type* | BF | | Second phase | | | | | | YS (MPa) | TS (MPa) | YR (%) | YS** (MPa) | vTrs (°C) | YS (MPa) | TS (MPa) | YR (%) | ΔYS*** (MPa) | |
| | | | Area ratio (%) | Aver-age grain size (μm) | Massive martensite | | | | Area ratio of rod-like mar-tensite**** | Others | | | | | | | | | | | |
| | | | | | Area ratio (%) | Aver-age grain size (μm) | Maxi-mum grain size (μm) | Aspect ratio | | Type*: Area ratio | | | | | | | | | | |
| 13 | B | BF+M | 92.5 | 3.7 | 6.5 | 1.4 | 2.8 | 3.5 | 1.0 | - | 536 | 715 | 75 | 513 | -105 | 555 | 692 | 80 | 42 | Inventive example |
| 14 | C | BF+M | 91.5 | 4.1 | 7.5 | 1.0 | 4.5 | 4.5 | 1.0 | - | 602 | 813 | 74 | 595 | -100 | 662 | 785 | 84 | 67 | Inventive example |
| 15 | D | BF+M+B | 92.5 | 6.1 | 3.5 | 2.5 | 3.4 | 2.5 | 1.0 | B:3.0 | 586 | 698 | 84 | 567 | -95 | 579 | 670 | 86 | 12 | Inventive example |
| 16 | E | BF+M+B | 89.5 | 5.8 | 3.0 | 2.8 | 3.6 | 2.0 | 0.5 | B:7.0 | 687 | 828 | 83 | 671 | -90 | 674 | 799 | 84 | 3 | Inventive example |
| 17 | F | BF+M | 86.5 | 3.5 | 12 | 1.1 | 3.6 | 3.0 | 1.5 | - | 580 | 865 | 67 | 575 | -110 | 673 | 842 | 80 | 98 | Inventive example |
| 18 | G | BF+B | 80.0 | 5.5 | - | - | - | - | - | B:20.0 | 608 | 683 | 89 | 594 | -40 | 518 | 662 | 78 | -76 | Compara-tive exam-ple |
| 19 | H | BF+F | 89.5 | 13.0 | 0.5 | 1.6 | 5.8 | 3.5 | - | F:10.0 | 520 | 591 | 88 | 513 | -50 | 451 | 568 | 79 | -62 | Compara-tive exam-ple |
| 20 | I | BF | 99.5 | 4.7 | 0.5 | 0.8 | 4.1 | 3.0 | - | - | 557 | 626 | 89 | 545 | -100 | 480 | 603 | 80 | -65 | Compara-tive exam-ple |
| 21 | J | BF | 99.0 | 2.2 | 1.0 | 0.6 | 3.2 | 2.0 | - | - | 595 | 654 | 91 | 577 | -10 | 527 | 635 | 83 | -50 | Compara-tive exam-ple |

(continued)

| Steel sheet No. | Steel No. | Microstructure | | | | | | | | | | Tensile properties | | | | Toughness | steel pipe strength | | | | Remarks |
| | | | BF | | Second phase | | | | | | Others | | | | | | | | | | |
| | | | | | Massive martensite | | | | Area ratio of rod-like martensite**** | | | YS (MPa) | TS (MPa) | YR (%) | YS** (MPa) | vTrs (°C) | YS (MPa) | TS (MPa) | YR (%) | ΔYS*** (MPa) | |
| | | Type* | Area ratio (%) | Average grain size ($\mu$m) | Area ratio (%) | Average grain size ($\mu$m) | Maximum grain size ($\mu$m) | Aspect ratio | | Type*: Area ratio | | | | | | | | | | | |
| 22 | K | BF+M | 94.0 | 2.4 | 6.0 | 1.0 | 3.0 | 4.0 | 1.0 | - | | 758 | 875 | 87 | 743 | -80 | 683 | 855 | 80 | -60 | Comparative example |
| 23 | L | BF+M+F | 95.5 | 11.2 | 3.0 | 2.6 | 5.2 | 3.5 | 0.5 | F:1.0 | | 637 | 758 | 84 | 612 | -35 | 614 | 736 | 83 | 2 | Comparative example |
| 24 | M | BF+M+B | 95.0 | 4.0 | 4.0 | 1.3 | 4.8 | 3.0 | 0.5 | B:1.0 | | 582 | 690 | 84 | 568 | -95 | 574 | 673 | 85 | 6 | Compar. example |

*) F: ferrite, P: pearlite, BF: bainitic ferrite, B: bainite, M: martensite
**) Yield strength in a direction inclined at an angle of 30° with respect to the rolling direction
***) ΔYS = YS of steel sheet - YS of steel pipe
****) Ratio (%) of martensite having an aspect ratio of 5.0 or more with respect to the total amount of martensite

**Claims**

1. A hot rolled steel sheet comprising a composition containing, on a mass percent basis:

   0.03% to 0.10% C; 0.10% to 0.50% Si;
   1.4% to 2.2% Mn; 0.025% or less P;
   0.005% or less S; 0.005% to 0.10% Al;
   0.02% to 0.10% Nb; 0.001% to 0.030% Ti;
   0.05% to 0.50% Mo; 0.05% to 0.50% Cr;
   0.01% to 0.50% Ni; and further optionally one or more selected from
   0.50% or less Cu; 0.10% or less V;
   0.0005% or less B; and 0.0005% to 0.0050% Ca, and
   the balance being Fe and incidental impurities; and a microstructure including a main phase that contains bainitic ferrite and a secondary phase that contains massive martensite having an aspect ratio of less than 5.0 in an area ratio of 1.4% to 15%, wherein the average grain size of the bainitic ferrite is 10 μm or less, wherein the composition is such that Moeq defined by expression (1) described below satisfies the range of 1.5% to 2.2% by mass,

$$\text{Moeq (\%)} = \text{Mo} + 0.36\text{Cr} + 0.77\text{Mn} + 0.07\text{Ni} \qquad (1)$$

   where Mn, Ni, Cr, and Mo represent the respective contents (% by mass).

2. The hot rolled steel sheet according to claim 1,
   wherein the massive martensite has a maximum size of 5 μm or less and an average size of 0.5 to 3.0 μm.

3. A method for producing a hot rolled steel sheet, comprising:

   subjecting a steel to a hot rolling step, a cooling step, and a coiling step to provide a hot rolled steel sheet, wherein the steel has a composition according to claim 1,
   the hot rolling step includes heating the steel to a heating temperature of 1050°C to 1300°C, subjecting the heated steel to rough rolling to form a sheet bar, and subjecting the sheet bar to finishing rolling in the temperature range of 930°C or lower at a cumulative rolling reduction of 50% or more to provide a hot rolled steel sheet,
   the cooling step includes primary cooling in which cooling is started immediately after the completion of the finishing rolling, and the steel sheet is cooled to a cooling stop temperature in the temperature range of 600°C to 450°C at an average cooling rate of 5 to 30 °C/s, the average cooling rate being measured at the middle portion of the sheet in the thickness direction; and secondary cooling in which the steel sheet is cooled from the cooling stop temperature to a coiling temperature at an average cooling rate of 2 °C/s or lower or in which the steel sheet is held in the temperature range of the cooling stop temperature to the coiling temperature for a holding time of 20 s or more, and the coiling step includes coiling the steel sheet at a coiling temperature of 450°C or higher, the coiling temperature being based on a surface temperature, wherein the composition is such that Moeq defined by expression (1) described below satisfies the range of 1.5% to 2.2% by mass,

$$\text{Moeq (\%)} = \text{Mo} + 0.36\text{Cr} + 0.77\text{Mn} + 0.07\text{Ni} \qquad (1)$$

   where Mn, Ni, Cr, and Mo represent the respective contents (% by mass).

**Patentansprüche**

1. Heißgewalztes Stahlblech mit einer Zusammensetzung, die auf Basis von Massen% enthält:

   0,03 % bis 0,10 % C;
   0,10 % bis 0,50 % Si;
   1,4 % bis 2,2 % Mn;
   0,025 % oder weniger P;
   0,005 % oder weniger S;

0,005 % bis 0,10 % Al;

0,02 % bis 0,10 % Nb;

0,001 % bis 0,030 % Ti;

0,05 % bis 0,50 % Mo;

0,05 % bis 0,50 % Cr;

0,01 % bis 0,50 % Ni;

und ferner optional eines oder mehrere, die ausgewählt sind aus

0,50 % oder weniger Cu;

0,10 % oder weniger V;

0,0005 % oder weniger B; und

0,0005 % bis 0,0050 % Ca,

wobei der Rest Fe und zufällige Verunreinigungen sind;

und eine Mikrostruktur, die eine Hauptphase, die bainitisches Ferrit enthält, und eine sekundäre Phase aufweist, die massives Martensit mit einem Aspektverhältnis von kleiner als 5,0 in einem Flächenverhältnis von 1,4 % bis 15 % enthält, wobei die mittlere Korngröße des bainitischen Ferrits 10 $\mu$m oder weniger beträgt, wobei die Zusammensetzung derart ist, dass Moeq, das durch den nachfolgenden beschriebenen Ausdruck (1) festgelegt ist, im Bereich von 1,5 Massen% bis 2,2 Massen% liegt,

$$\text{Moeq (\%)} = \text{Mo} + 0{,}36 \text{ Cr} + 0{,}77 \text{ Mn} + 0{,}07 \text{ Ni} \qquad (1),$$

wobei Mn, Ni, Cr und Mo die jeweiligen Anteile (in Massen%) repräsentieren.

2. Heißgewalztes Stahlblech nach Anspruch 1, wobei das massive Martensit eine maximale Größe von 5 $\mu$m oder weniger und eine mittlere Größe von 0,5 bis 3,0 $\mu$m hat.

3. Verfahren zur Herstellung eines heißgewalzten Stahlblechs, mit:

Ausführen, an einem Stahl, eines Heißwalzschrittes, eines Kühlschrittes und eines Aufwickelschrittes, um ein heißgewalztes Stahlblech bereitzustellen, wobei der Stahl eine Zusammensetzung nach Anspruch 1 hat, wobei der Schritt des Heißwalzens beinhaltet: Erwärmen des Stahls auf eine Aufheiztemperatur von 1050 °C bis 1300 °C, Ausführen eines groben Walzens an dem erwärmten Stahl, sodass ein Blechstab gebildet wird, und Ausführen eines Endwalzens an dem Blechstab im Temperaturbereich von 930 °C oder niedriger mit einer kumulativen Walzreduktion von 50 % oder mehr, sodass ein heißgewalztes Stahlblech bereitgestellt wird, wobei der Kühlschritt enthält: ein erstes Kühlen, in welchem das Kühlen unmittelbar nach der Beendigung des abschließenden Walzens begonnen wird, und das Stahlblech auf eine Kühlunterbrechungstemperatur im Bereich von 600 °C bis 450 °C bei einer mittleren Abkühlrate von 5 bis 30 °C/s gekühlt wird, wobei die mittlere Abkühlrate an dem mittleren Bereich des Bleches in der Dickenrichtung gemessen wird; und ein zweites Kühlen, in welchem das Stahlblech von der Kühlunterbrechungstemperatur auf eine Wickeltemperatur bei einer mittleren Abkühlrate von 2 °C/s oder niedriger gekühlt wird, oder wobei das Stahlblech in dem Temperaturbereich zwischen der Kühlunterbrechungstemperatur und der Wickeltemperatur für eine Haltezeit von 20 s oder länger gehalten wird, und wobei der Aufwickelschritt ein Aufwickeln des Stahlblechs bei einer Wickeltemperatur von 450 °C oder höher beinhaltet, wobei die Wickeltemperatur auf einer Oberflächentemperatur beruht, und wobei die Zusammensetzung derart ist, dass ein durch den nachfolgend beschriebenen Ausdruck (1) definiertes Moeq im Bereich von 1,5 Massen% bis 2,2 Massen% liegt,

$$\text{Moeq (\%)} = \text{Mo} + 0{,}36 \text{ Cr} + 0{,}77 \text{ Mn} + 0{,}07 \text{ Ni} \qquad (1),$$

wobei Mn, Ni, Cr und Mo jeweiligen Anteile (in Massen%) repräsentieren.

**Revendications**

1. Tôle d'acier laminée à chaud comprenant une composition contenant, sur une base de pourcentage en masse :

0,03 % à 0,10 % de C ; 0,10 % à 0,50 % de Si ;

1,4 % à 2,2 % de Mn ; 0,025 % ou moins de P ;
0,005 % ou moins de S ; 0,005 % à 0,10 % d'Al ;
0,02 % à 0,10 % de Nb ; 0,001 % à 0,030 % de Ti ;
0,05 % à 0,50 % de Mo ; 0,05 % à 0,50 % de Cr ;
0,01 % à 0,50 % de Ni ;
et éventuellement, en outre, un ou plusieurs éléments choisis parmi
0,50 % ou moins de Cu ; 0,10 % ou moins de V ;
0,0005 % ou moins de B ; et 0,0005 % à 0,0050 % de Ca,
le reste étant du Fe et des impuretés inévitables ;
et une microstructure incluant une phase principale qui contient de la ferrite bainitique et une phase secondaire qui contient de la martensite massive ayant un rapport d'aspect inférieur à 5,0 en une fraction surfacique de 1,4 % à 15 %, dans laquelle la taille de grain moyenne de la ferrite bainitique est inférieure ou égale à 10 μm, dans laquelle la composition est telle que Moeq défini par l'expression (1) décrite ci-dessous est dans la plage de 1,5 % à 2,2 % en masse,

$$\text{Moeq (\%)} = \text{Mo} + 0{,}36\text{Cr} + 0{,}77\text{Mn} + 0{,}07\text{Ni} \qquad (1)$$

où Mn, Ni, Cr et Mo représentent les teneurs respectives (% en masse).

2. Tôle d'acier laminée à chaud selon la revendication 1,
   dans laquelle la martensite massive a une taille maximale de 5 μm ou moins et une taille moyenne de 0,5 à 3,0 μm.

3. Procédé de production d'une tôle d'acier laminée à chaud, comprenant :

   la soumission d'un acier à une étape de laminage à chaud, une étape de refroidissement et une étape d'enroulement pour fournir une tôle d'acier laminée à chaud,
   dans lequel l'acier a une composition selon la revendication 1,
   l'étape de laminage à chaud inclut le chauffage de l'acier à une température de chauffage de 1050 °C à 1300 °C, la soumission de l'acier chauffé à un laminage de dégrossissage pour former une barre de tôle et la soumission de la barre de tôle à un laminage de finissage dans la plage de température de 930 °C ou moins avec un taux de réduction par laminage cumulé de 50 % ou plus pour fournir une tôle d'acier laminée à chaud,
   l'étape de refroidissement inclut un refroidissement principal dans lequel le refroidissement est démarré immédiatement après la fin du laminage de finissage, et la tôle d'acier est refroidie jusqu'à une température d'arrêt de refroidissement dans la plage de température de 600 °C à 450 °C à une vitesse moyenne de refroidissement de 5 à 30 °C/s, la vitesse moyenne de refroidissement étant mesurée dans la partie centrale de la tôle dans le sens de l'épaisseur ; et un refroidissement secondaire dans lequel la tôle d'acier est refroidie depuis la température d'arrêt de refroidissement jusqu'à une température d'enroulement à une vitesse moyenne de refroidissement de 2 °C/s ou moins ou dans lequel la tôle d'acier est maintenue dans la plage de température allant de la température d'arrêt de refroidissement à la température d'enroulement pendant un temps de maintien de 20 s ou plus, et l'étape d'enroulement inclut l'enroulement de la tôle d'acier à une température d'enroulement de 450 °C ou plus, la température d'enroulement étant basée sur une température de surface, la composition étant telle que Moeq défini par l'expression (1) décrite ci-dessous est dans la plage de 1,5 % à 2,2 % en masse,

$$\text{Moeq (\%)} = \text{Mo} + 0{,}36\text{Cr} + 0{,}77\text{Mn} + 0{,}07\text{Ni} \qquad (1)$$

où Mn, Ni, Cr et Mo représentent les teneurs respectives (% en masse).

FIG. 1

# FIG. 2

**REFERENCES CITED IN THE DESCRIPTION**

**Patent documents cited in the description**

- JP 63227715 A
- JP 10176239 A
- JP 2006299413 A
- JP 2010059472 A
- EP 2133441 A1